# EUROPÄISCHE PATENTANMELDUNG

(11) **EP 1 086 968 A1**
(43) Veröffentlichungstag der Anmeldung: **28.03.2001**
(21) Anmeldenummer: 00108746.9
(22) Anmeldetag: 22.04.2000
(51) Int. Cl.: C08G 18/10

(54) **Formteil und Verfahren zur Herstellung des Formteils**

(30) Priorität: 21.09.1999 DE 19945102
(71) Anmelder: Mitex Gummifabrik Hans Knott GmbH, 40673 Erkrath (DE)
(72) Erfinder: Heinen, Georg, 40699 Erkrath (DE)
(74) Vertreter: Kloiber, Thomas, Dr. Dipl.-Phys.

(57) **Zusammenfassung**

Die Erfindung betrifft ein Formteil, insbesondere ein Maschinenelement, z.B. in Form von Walzenkörpern, Hülsen, Lamellen oder anderen Führungskörpern. Die der Erfindung zugrunde liegende Aufgabe besteht darin, ein Formteil und ein Verfahren zur Herstellung des Formteils anzugeben, welches in allen Abmessungen fertigbar ist und über die gesamte Nutzungsdauer weitgehend gleichbleibende Traktions-, Friktions-, Steuerungs-, und Bremseigenschaften besitzt. Diese Aufgabe wird dadurch gelöst, daß das Formteil aus einem Werkstoff besteht, der eine Mikroporösität mit einer stochastischen Verteilung von fluidisch gefüllten Blasen aufweist, wobei die Endhärte des Werkstoffs (1) größer oder gleich 40 Shore A beträgt.

## Beschreibung

Die Erfindung betrifft ein Formteil, insbesondere ein Maschinenelement, z.B. in Form von Walzenkörpern Hülsen, Lamellen oder anderen Führungskörpern.

Für Beschichtungen, z.B. von S-Rollen, die zumeist in Gruppen von mehreren Rollen ein Produkt z.B. Stahl-, Edelstahl- oder Aluminiumband, mit hohem Umschlingungswinkel antreiben, führen, steuern und bremsen, kommen in der Regel Kunststoffbeschichtungen aus Polyurethan zum Einsatz, da sie eine besonders hohe Schnittfestigkeit, Kerbzähigkeit, Elastizität und einen geringen Abrieb aufweisen. Beschichtungen aus anderen Elastomeren kommen ebenfalls zum Einsatz, haben aber weniger vorteilhafte Materialeigenschaften. Als Nachteil aller bisher eingesetzten Kunststoffbeschichtungen wirkt sich die rasche Verglättung der Oberflächen aus. Diese Verglättung wird durch hohe Linienlasten und Bandzüge, Friktion, erhöhte Temperaturen, Chemikalien, Walz- und Prozeßöle stark beschleunigt. Durch die Verglättung der Oberfläche nehmen die Traktions-, Friktions, Steuerungs-, und Bremseigenschaften der Walzenbeschichtungen rapide ab, es kommt zu Friktionsverlusten der Beschichtungen und die Kontrolle der Produktführung wird gefährdet. Besonders negativ wirkt sich beim Betrieb herkömmlicher Beschichtungen der Gleiteffekt, der durch Korrosionsschutz- und Walzöle hervorgerufen wird, auf den Prozeß aus, und es kommt beispielsweise zum unerwünschten Durchrutschen angetriebener und nicht angetriebener Umlenk-, Steuer-, Zug-, Treib- und Bremsrollen. Dies kann z.B. zur Veränderung der für die Qualität der Produkte, z.B. in Beizlinien bei der Säurebehandlung, wichtigen, zeitabhängigen Prozesse führen. Die Abnahme der Oberflächenrauhigkeit und die Reduktion des Reibungskoeffizienten kann somit direkt einen negativen Einfluß auf die Produktqualität haben.

Besonders gravierend wirkt sich aus, daß die Rollen aufgrund ihrer Funktionsprinzipien erhebliche Abmessungen und Gewichte bis zu vielen Tonnen haben und häufig an schwer zugänglichen Positionen in Anlagen installiert sind, so daß jeder Wechsel einen erheblichen Zeit- und Konstruktionsaufwand verursacht und zusätzlichen Produktionsausfall und Kosten bedeutet.

Der für ein Beispiel aus der Metallindustrie beschriebene Stand der Technik und die daraus resultierenden Nachteile ergeben sich für alle Anwendungsgebiete, in denen Produkte von Kunststoffoberflächen geführt, gesteuert, angetrieben und gebremst werden oder diese umschlingen und in denen Verglättungen der Kunststoffoberflächen die Steuerung des Substrat- oder Produkttransports negativ beeinflussen können.

Bis heute war es möglich, kleinere Walzenbeschichtungen, d.h. Walzenbezüge mit geringem Volumen, mit permanenter Rauhheit zu fertigen, wenn man im Handgußverfahren Beschichtungen vorbereitete und dann in das bereits vorgegossene Material bestimmte Substanzen einmischte. Aus diesem Behältnis konnte dann von Hand der Walzenbezug in die Form gegossen werden. Die Nachteile dieser Beschichtungstechnologie liegen darin, daß man aufgrund des Formgusses und der relativ kurzen Gelierzeit nur kleine Walzenbeschichtungen fertigen konnte (max. ca. 20 kg) und des weiteren darin, daß sich für diese Technologie nur bestimmte abrasive Substanzen eignen, die dann im späteren Einsatz aber zu einem Verkratzen der sensiblen Blechoberflächen führen können.

Die DE 34 37 553 A1 beschreibt ein Bauteil und ein Verfahren zur Herstellung dieses Bauteils zur Dokumentenzuführung mit einem inneren Kern aus einem Elastomer mit hoher Nachgiebigkeit und einer äußeren Abdeckung aus einem Elastomer mit hohem Reibungskoeffizienten, beispielsweise Silikongummi. Das Glattwerden wird dadurch verhindert, dass die Oberfläche mit einem geeigneten Muster versehen wird, oder eine kreppartige Mattierung vorgesehen wird. Der innere Kern weist hier eine Zellstruktur auf. Dieser innere Kern kommt jedoch mit dem zu transportierenden Produkt nicht in Berührung und weist eine hohe Kompressibilität auf. Die freigelegte Zelistruktur des inneren Kerns soll lediglich die Verbindung zwischen innerem Kern und äußerer Abdeckung verbessern.

Im Artikel GAK 6/1980 Jg. 33 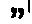 Die Fertigung elastomerbeschichteter Walzen im Spiegel der Patentliteratur", [Zeppernick, Fritz] wird beschrieben, dass Walzenoberflächen bei der Endfertigung der Elastomerbeschichtung angeschliffen werden. Je nachdem, wie die Schnittgeschwindigkeit, Schleifgeschwindigkeit und die Abnahme wie auch die Gestaltung des Schleifsteins ausgewählt werden, können verschiedenen Oberflächenprofile geschliffen werden. Diese verändern sich aber durch die Prozesse ständig, so dass es zwangsläufig zur Verglättung der Oberfläche kommt. In diesem Zeitschriftenartikel werden auch Walzenbeschichtungen beschrieben, die geschlossene oder verbundene Poren aufweisen, welche das gesamte Volumen durchsetzen. Bei diesen Materialien handelt es sich um Zellkautschuke, die mittels Treibmittel während der Vulkanisation eine Zellstruktur ausbilden. Diese Materialien sind jedoch stark kompressibel. Aufgrund der geringen Abriebfestigkeit, der geringen Schnittfestigkeit und der geringen Druck- oder Zugbelastung sind diese Materialien nicht für den Transport von Bandstahl etc. geeignet.

Die der Erfindung zugrunde liegende Aufgabe besteht darin, ein Formteil und ein Verfahren zur Herstellung des Formteils anzugeben, welches in allen Abmessungen fertigbar ist und über die gesamte Nutzungsdauer weitgehend gleichbleibende Traktions-, Friktions-, Steuerungs-, und Bremseigenschaften besitzt, und insbesondere für den Einsatz mit Bandstahl geeignet ist.

Die der Erfindung zugrunde liegende Aufgabe wird dadurch gelöst, dass das Formteil aus einem Werkstoff besteht, der eine Mikroporösität mit einer stochastischen Verteilung von fluidisch gefüllten Blasen aufweist, wobei die Endhärte des Werkstoffs größer oder gleich 40 Shore A beträgt.

Dadurch, das der Werkstoff über sein ganzes Volumen eine Mikroporösität mit einer stochastischen Verteilung von fluidisch gefüllten Blasen aufweist, kommt es selbst durch Abrieb der Oberfläche nicht zu einer Verglättung, da immer wieder tieferliegende Schichten mit gleicher Struktur die neue Oberfläche bilden. Die Oberfläche muß also nicht wie bei herkömmlichen Formteilen, an- oder aufgerauht werden, um den Friktionskoeffizienten zu erhöhen. Die mit diesen Prozessen hergestellten Oberflächen weisen im Gegensatz zum erfindungsgemäßen Formteil keine Langzeitwirkung auf.

Sollte durch mechanische Beschädigung eine Überarbeitung, z.B. ein Überschleifen oder Überdrehen der Oberfläche erforderlich sein, so wird ohne die Erfordernis aufwendiger zusätzlicher Prozesse, die vorteilhafte, erfindungsgemäße Oberfläche erhalten.

Ein weiterer großer Vorteil der Erfindung ist, daß eine rauhe Oberflächenstruktur ohne den Zusatz von abrasiven Fremdsubstanzen geschaffen werden kann, die negative Einflüsse auf die Oberfläche von Produkten haben können, die mit den durch den Zusatz von abrasiven Substanzen hergestellten Oberflächen in Kontakt kommen.

Durch die Endhärte des Werkstoffs von größer oder gleich 40 Shore A wird gewährleistet, dass die Walzen auch bei Prozessen, bei denen hohe Belastungen für die Walzen auftreten, beispielsweise bei der Verarbeitung von Bandstahl, bedenkenlos eingesetzt werden können.

Das Formteil ist besonders formistabil, wenn der Werkstoff aus Polyether-Polyurethanen (AU), Polyester-Polyurethanen (EU) oder ungesättigten Polyesterharzen (UP) oder Mischungen dieser Komponenten besteht. Als Basismaterial haben sich diese Polyurethane besonders bewährt. Diese Elastomere weisen eine große Struktur- und Reißfestigkeit auf und lassen sich besonders gut verarbeiten. Weiterhin zeichnen sie sich durch hohe Schnittfestigkeit, Kerbzähigkeit, Elastizität und einen geringen Abrieb aus.

Man erhält ein besonders vorteilhaftes Formteil, wenn der Werkstoff aus einem aminisch und/oder diolisch verknüpften Präpolymersystem gewählt ist. Die aminisch und/oder mit zweiwertigen Alkoholen verknüpften Ketten weisen eine hohe Elastizität auf.

Eine besonders vorteilhafte Ausführungsform des Formteils besteht darin, daß die stochastisch verteilten, fluidisch gefüllten Blasen einen Durchmesser zwischen 0,05 mm bis 3,5 mm, vorzugsweise zwischen 0,5 mm bis 1,5 mm aufweisen. Der so ausgestaltete Werkstoff erlaubt die Übernahme von Prozeßchemikalien, z.B. Walzöl von Metallbändern, in die Blasenstruktur, reduziert somit die unerwünschten Gleit- und Rutscheffekte und regeneriert sich im Falle rotierender Körper mit jeder Umdrehung durch die Entfernung der Oberflächenstruktur, so daß die Funktionsoberfläche bei dem Folgekontakt wieder die ursprüngliche Aufnahmeeigenschaft und somit optimale Produktführungseigenschaften aufweist.

Durch geschlossene Blasen, die vom Kunststoff umhüllt sind, bleibt die Härte des Werkstoffs in vorteilhafter Weise unverändert. Weiterhin wird das Aufnahmevermögen von Prozeßchemikalien auf ein gewünschtes Maß reduziert. Im Falle von offenen Blasen würde sich das gesamte Formteil durch Kapillarwirkung vollsaugen und die Abgabe wäre aus dem gleichen Grund deutlich erschwert.

Nach dem Herstellungsprozeß sind die Blasen aufgrund der hohen Oberflächenspannung des Kunststoffs an der Oberfläche geschlossen. Damit direkt von Anfang an eine brauchbare Oberfläche mit allen beschriebenen vorteilhaften Eigenschaften zur Verfügung steht, ist es besonders vorteilhaft, daß die Oberfläche mechanisch abgetragen ist.

Der Werkstoff weist vorteilhafterweise eine Dichte von größer 0,7 g/cm³ auf.

Gemäß einer vorteilhaften Ausführungsform der Erfindung, sind die Blasen des Werkstoffs mit Gas gefüllt. Die Elastizität des Werkstoffs wird so deutlich erhöht.

Gemäß eines vorteilhaften Verfahrens zur Herstellung des erfindungsgemäßen Formteils wird der Werkstoff auf der Basis von Gieß-, Extrusions- oder Spritzgußkunststoffen hergestellt. Dies hat den Vorteil, daß eventuell schon vorhandene Anlagen für die Herstellung von Kunststoffen nicht ausgetauscht werden müssen. Dies bedeutet eine enorme Kostenersparnis.

Die Verwendung von Polyether-Polyurethanen (AU), Polyester-Polyurethanen (EU) oder ungesättigten Polyesterharzen (UP) oder Mischungen dieser Komponenten zur Werkstoffherstellung hat die Vorteile, daß diese Elastomere eine große Struktur- und Reißfestigkeit aufweisen und sich gut verarbeiten lassen. Weiterhin zeichnen sie sich durch hohe Schnittfestigkeit, Kerbzähigkeit, Elastizität und einen geringen Abrieb aus.

Die Präpolymersysteme werden besonders vorteilhaft aminisch und/oder diolisch vernetzt. Die aminisch und/oder mit zweiwertigen Alkoholen verknüpften Ketten weisen eine hohe Elastizität und Bindungseigenschaften auf.

Bei dem erfindungsgemäßen Verfahren ist es vorteilhafter Weise auch möglich, Einkomponenten Gießsysteme ähnlicher Viskosität einzusetzten. Diese Maßnahme erleichtert die Verarbeitung.

Gemäß einer besonders vorteilhaften Weiterentwicklung des Verfahrens, werden die Blasen durch chemische Reaktion im Werkstoff erzeugt. Es werden beispielsweise beim Erhitzen treibgasentwickelnde Substanzen verwendet, insbesondere Azoverbindungen oder Azide. Bei den verwendeten Polyurethanen reagiert beispielsweise die endständige Isocyanatgruppe mit Wasser unter Kohlendioxidentwicklung, das als Treibgas fungiert.

Gemäß einer vorteilhaften Verfahrensart werden die Blasen durch physikalische Mechanismen eingebracht. Beispielsweise wird Kohlendioxid bei Raumtemperatur von 10 °C bis 30 °C und Drücken größer 5 bar eingepreßt. Dieses Verfahren ist leicht steuerbar, die Blasenverteilung kann über die Prozeßparameter gesteuert werden.

Das erfindungsgemäße Verfahren zeichnet sich dadurch aus, daß in dem zur Beschichtung verwendeten Kunststoff geschlossene Blasen erzeugt werden, welche stochastisch im gesamten Volumen verteilt sind. Das Aufnahmevermögen von Prozeßchemikalien wird auf ein gewünschtes Maß reduziert. Im Falle von offenen Blasen würde sich das gesamte Formteil durch Kapillarwirkung vollsaugen und die Abgabe wäre aus dem gleichen Grund deutlich erschwert.

Anhand der Zeichnungen, die Ausführungsbeispiele der Erfindung darstellen, wird diese näher beschrieben.

Es zeigen:
FIG. 1: einen perspektivischen Schnitt durch den Werkstoff und
Fig. 2: ein Formteil in Form eines Walzenkörpers.

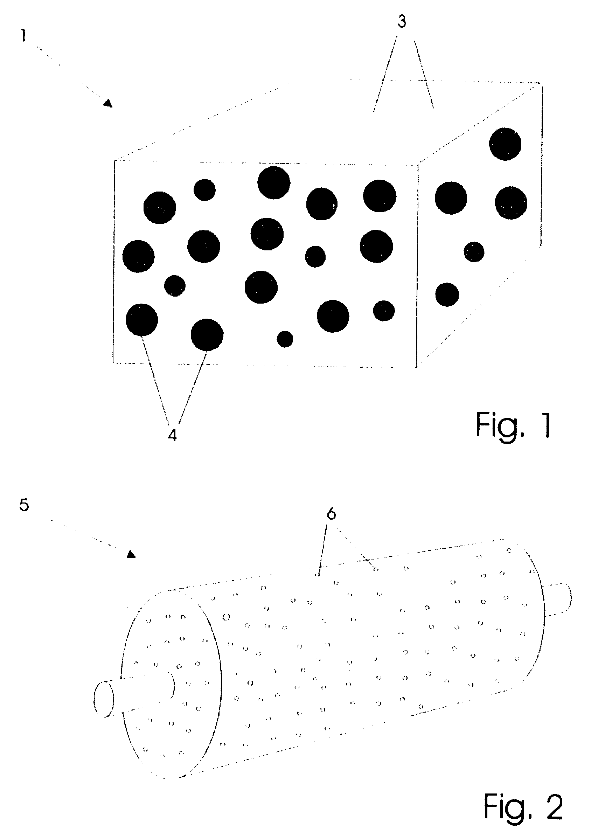

In Figur 1 ist ein perspektivischer Schnitt durch den Werkstoff 1 dargestellt. Auf der Oberfläche 2 sind die nach der Herstellung noch geschlossenen Blasen 3 dargestellt. Damit direkt von Anfang an eine brauchbare Oberfläche mit allen beschriebenen vorteilhaften Eigenschaften zur Verfügung steht, ist es sinnvoll, die Oberfläche 2 mechanisch abzutragen. Die angeschnittenen Blasen haben einen mittleren Durchmesser von 0,5 mm bis 1,5 mm. Der Werkstoff weist eine Härte von 90 (+/- 5) Shore A auf und hat eine Dichte von 1,1 g/cm³.

In Figur 2 ist ein Formteil 5 in Form eines Walzenkörpers dargestellt. Man kann deutlich erkennen, das die gesamte Walze von stochastisch verteilten Blasen 6 durchsetzt ist, wodurch ein optimaler Friktionskoeffizient gegeben ist.

## Patentansprüche

1. Formteil, insbesondere ein Maschinenelement, z.B. in Form von Watzenkörpern, Hülsen, Lamellen oder anderen Führungskörpern, **dadurch gekennzeichnet, daß** es aus einem Werkstoff (1) besteht, der eine Mikroporösität mit einer stochastischen Verteilung von fluidisch gefüllten Blasen (4) aufweist, wobei die Endhärte des Werkstoffs (1) größer oder gleich 40 Shore A beträgt.

2. Formteil nach Anspruch 1, **dadurch gekennzeichnet, daß** der Werkstoff (1) aus Polyether-Polyurethanen (AU), Polyester-Polyurethanen oder ungesättigten Polyesterharzen (UP) oder Mischungen dieser Komponenten besteht.

3. Formteil nach einem der vorhergehenden Ansprüche, **dadurch gekennzeichnet, daß** der Werkstoff (1) aus einem aminisch und/oder diolisch verknüpften Präpolymersystem gewählt ist.

4. Formteil nach einem der vorhergehenden Ansprüche, **dadurch gekennzeichnet, daß** die Blasen (3, 4 und 6) einen mittleren Durchmesser zwischen 0,05 mm bis 3,5 mm, vorzugsweise zwischen 0,5 mm bis 1,5 mm, aufweisen.

5. Formteil nach einem der vorhergehenden Ansprüche, **dadurch gekennzeichnet, daß** die Blasen geschlossen (4) sind.

6. Formteil nach einem der vorhergehenden Ansprüche, **dadurch gekennzeichnet, daß** die Oberfläche (2) des Formteils (5) mechanisch abgetragen ist.

7. Formteil nach einem der vorhergehenden Ansprüche, **dadurch gekennzeichnet, daß** der Werkstoffs (1) eine Dichte größer 0,7 g/cm³ aufweist.

8. Formteil nach einem der vorhergehenden Ansprüche, **dadurch gekennzeichnet, daß** die Blasen (4) des Werkstoffs(1) mit Gas gefüllt sind.

9. Verfahren zur Herstellung des erfindungsgemäßen Formteils, **dadurch gekennzeichnet, daß** der Werkstoff (1) auf der Basis von Gieß-, Extrusions- oder Spritzgußkunststoffen hergestellt wird.

10. Verfahren nach Anspruch 9, **dadurch gekennzeichnet, daß** Polyether-Polyurethane (AU), Polyester-Polyurethane oder ungesättigte Polyesterharze (UP) oder Mischungen dieser Komponenten verwendet werden.

11. Verfahren nach einem der Ansprüche 9 oder 10, **dadurch gekennzeichnet, daß** Präpolymersysteme insbesondere aminisch oder diolisch vernetzt werden.

12. Verfahren nach einem der Ansprüche 9 bis 11, **dadurch gekennzeichnet, daß** Einkomponenten Gießsysteme gleicher Viskosität zum Einsatz kommen.

13. Verfahren nach einem der Ansprüche 9 bis 12, **dadurch gekennzeichnet, daß** die Blasen (3, 4 und 6) durch chemische Reaktion im Werkstoff erzeugt werden.

14. Verfahren nach einem der Ansprüche 9 bis 13, **dadurch gekennzeichnet, daß** die Blasen (3, 4 und 6) durch physikalische Mechanismen eingebracht werden.

15. Verfahren nach einem der Ansprüche 9 bis 14, **dadurch gekennzeichnet, daß** für die Beschichtung von Maschinenelementen geschlossenzellige Kunststoffe verwendet werden.
